# DEMANDE DE BREVET EUROPEEN

(11) **EP 1 486 904 A1**
(43) Date de publication de la demande: **15.12.2004**
(21) Numéro de dépôt: 04300318.5
(22) Date de dépôt: 09.06.2004
(51) Int. Cl.: G06K 9/62, G06K 9/64, G06K 9/00

(54) **Génération d'une image type reconstituée à partir d'un ensemble de plusieurs images représentant un même élément**

(30) Priorité: 10.06.2003 FR 0306928
(71) Demandeur: STMicroelectronics S.A., 92120 Montrouge (FR)
(72) Inventeur: Tisse, Christel-Loic, 13380 Plan de Cuques (FR); Petit Jean, Guillaume, 13530 Trets (FR)
(74) Mandataire: de Beaumont, Michel

(57) **Abrégé**

L'invention concerne un procédé de génération d'une image type (R) comportant au moins trois valeurs par pixel, à partir d'un ensemble d'images binaires (I) représentant toutes un même élément, consistant à : sommer les valeurs binaires des pixels de mêmes coordonnées de l'ensemble d'images binaires ; générer un premier état dans l'image type si la somme des pixels de mêmes coordonnées des images binaires donne une valeur inférieure à un premier seuil ; et générer un deuxième état dans l'image type si la somme des pixels de mêmes coordonnées des images binaires donne une valeur supérieure à un deuxième seuil.

## Description

La présente invention concerne la génération d'une image numérique à partir d'un ensemble d'images binaires représentant toutes le même élément.

Un exemple d'application de la présente invention est le codage d'une image type reconstituée, représentative d'un iris d'un oeil lors d'un procédé de reconnaissance. Il peut s'agir soit de la génération à partir de plusieurs prises de vues d'une image type de référence à laquelle doivent être comparées des images courantes, soit d'une image type courante qui doit être comparée à une image de référence que cette dernière soit ou non générée par le système de l'invention.

Un iris est caractérisé par sa structure qui est un ensemble de motifs tridimensionnels de creux et de bosses, chaque motif ayant dans l'iris une direction radiale. Une telle texture se traduit, lors de l'acquisition numérique bidimensionnelle d'images, par l'alternance de zones claires et foncées. La variation de la texture dans l'iris depuis le bord de la pupille vers la cornée selon la direction est très faible. Les informations caractéristiques de la texture de l'iris varient essentiellement dans la position angulaire de cercles concentriques.

Pour permettre une reconnaissance d'iris relativement rapide, plutôt que de comparer point par point une image traitée à des images de référence, on extrait généralement la texture de l'iris de façon à obtenir une image binarisée généralement rectangulaire allongée. Cette forme vient d'un dépliement de l'anneau représentatif de l'iris dans l'oeil, suite au traitement appliqué à l'image.

La forme générale annulaire de l'iris est transformée sous forme rectangulaire droite en convertissant les coordonnées cartésiennes de l'iris en coordonnées polaires au moyen d'une conversion polaire à angle constant. L'image subit en outre plusieurs traitements parmi lesquels au moins un traitement de binarisation de façon à obtenir une image dans laquelle chacun des pixels est codé uniquement par 0 ou 1.

C'est cette image binarisée qui est ensuite généralement comparée à une image (de référence ou courante).

Généralement, la comparaison d'une image courante par rapport à une image de référence s'effectue alors par une simple combinaison logique bit à bit de type OU-Exclusif (XOR).

Un problème qui se pose dans l'acquisition de telles images et notamment pour le traitement de reconnaissance d'iris est lié à des incertitudes lors de l'acquisition provenant, par exemple, des mouvements de l'oeil ou de tâches liées à l'éclairage lors de la prise de vue.

On voit bien qu'en cas d'acquisition imparfaite, une comparaison bit à bit est difficilement fiable.

Des exemples de procédés de codage d'iris pour utilisation dans des processus de reconnaissance sont décrits, par exemple, dans la demande de brevet européen n° 1304647.

La présente invention vise à améliorer l'exploitation possible d'images courantes ou de référence représentatives d'un iris d'oeil.

L'invention vise plus particulièrement à s'affranchir des défauts de fiabilité des résultats de comparaison liés à l'imperfection des images lors de leur acquisition.

L'invention vise également à proposer une méthode particulièrement simple, qui soit compatible avec les traitements binaires des images.

L'invention vise également à ne requérir aucune modification des procédés classiques d'obtention des images binarisées dépliées classiques.

Pour atteindre ces objets et d'autres, la présente invention prévoit un procédé de génération d'une image type comportant au moins trois valeurs par pixel, à partir d'un ensemble d'images binaires représentant toutes un même élément, consistant à :
sommer les valeurs binaires des pixels de mêmes coordonnées de l'ensemble d'images binaires ;
générer un premier état dans l'image type si la somme des pixels de mêmes coordonnées des images binaires donne une valeur inférieure à un premier seuil ; et
générer un deuxième état dans l'image type si la somme des pixels de mêmes coordonnées des images binaires donne une valeur supérieure à un deuxième seuil.

Selon un mode de mise en oeuvre de la présente invention, le premier seuil est compris entre 0 et n/4, où n désigne le nombre d'images binaires.

Selon un mode de mise en oeuvre de la présente invention, le deuxième seuil est compris entre 3n/4 et 1, où n désigne le nombre d'images binaires.

Selon un mode de mise en oeuvre de la présente invention, les premier et deuxième seuils sont respectivement 0 et 1.

Selon un mode de mise en oeuvre de la présente invention, l'image type reconstituée contient, pour chaque pixel, la valeur de la somme des pixels des images d'origine.

Selon un mode de mise en oeuvre de la présente invention, l'image type reconstituée contient une valeur représentant un état indéterminé pour chaque pixel dont ladite somme est comprise entre lesdits seuils.

La présente invention prévoit également un procédé de comparaison d'une image courante par rapport à une image de référence, au moins l'une des images étant une image type reconstituée.

Selon un mode de mise en oeuvre de la présente invention, les images sont issues de vues numériques d'iris d'oeil.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 illustre le type d'image obtenu dans un procédé de binarisation d'un anneau d'iris ; et
la figure 2 illustre, sous forme de blocs, un mode de mise en oeuvre du procédé de l'invention.

Pour des raisons de clarté, seuls les éléments qui sont nécessaires à la compréhension de l'invention ont été représentés aux figures et seront décrits par la suite. En particulier, l'obtention des images binaires devant être exploitées pour la génération d'une image selon l'invention n'a pas été détaillée, l'invention pouvant être mise en oeuvre à partir de n'importe quel ensemble d'images binarisées classiques. De plus, les outils utilisables pour la mise en oeuvre de l'invention n'ont pas été détaillés, celle-ci pouvant être mise en oeuvre en utilisant les outils classiques d'exploitation d'images d'iris et notamment, des systèmes informatiques.

Une caractéristique de la présente invention est de reconstituer une image type comprenant au moins trois valeurs par pixel, à partir d'un ensemble d'images binaires dans lesquelles chaque pixel est codé sous la forme d'un seul bit.

L'invention sera décrite par la suite en relation avec un exemple d'application à la génération d'une image d'iris. On notera toutefois que celle-ci s'applique plus généralement dès que l'on souhaite générer une image type à partir d'un ensemble d'images binaires représentant la même chose afin de s'affranchir d'imperfections des images individuelles, que ces imperfections soient liées aux prises de vues elles-mêmes ou au traitement ultérieur menant à la binarisation des images.

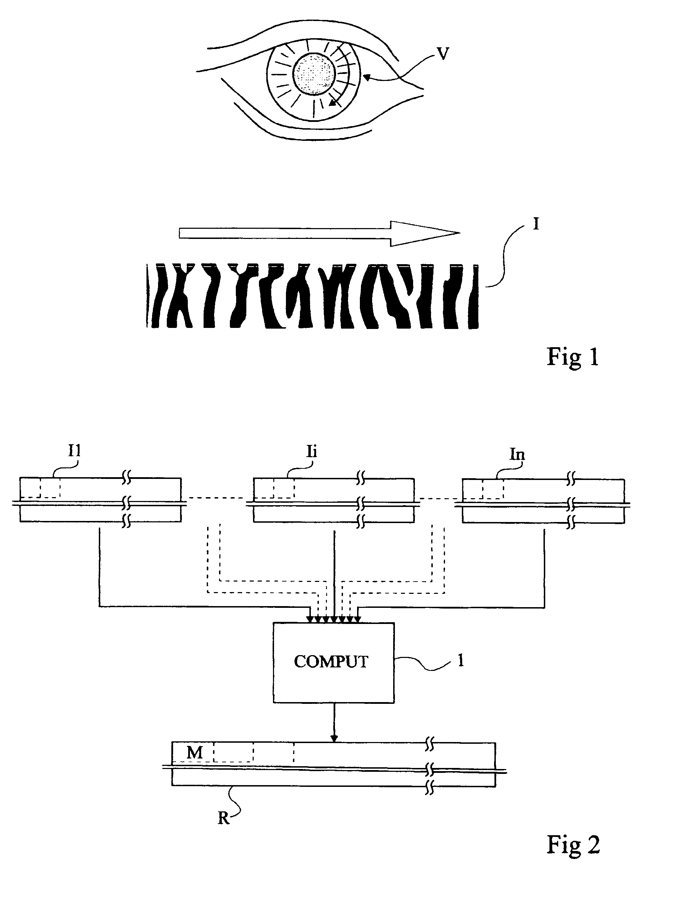

La figure 1 illustre un exemple d'image binaire I susceptible d'être exploitée par l'invention. Dans cet exemple, il s'agit d'une application à des images d'iris. L'image I binaire est obtenue par dépliement et traitement de filtrage et de binarisation d'une prise de vue V d'un iris comme cela est illustré en figure 1. L'extraction de l'image I à partir de la vue V est classique. En figure 1, on a illustré par des flèches le sens de dépliement de l'image.

La figure 2 illustre, sous forme de blocs, un mode de mise en oeuvre du procédé de génération d'une image type reconstituée R à partir d'un ensemble de plusieurs images binaires I1, ..., Ii, ..., In.

Selon l'invention, on part d'un ensemble de n images qui sont, de préférence, individuellement recalées en translation pour compenser d'éventuelles différences de prises de vue par rotation de l'oeil. Un tel recalage s'effectue en appliquant, à l'ensemble d'images I, une étape de comparaison par recherche d'erreur minimale entre les différentes images. Par exemple, une telle recherche d'erreur minimale utilise des algorithmes mettant en oeuvre une distance de Hamming. De tels procédés de recalage par translation d'images sont connus, par exemple, de la demande de brevet américain numéro 2003-0076984.

L'étape de recalage en translation entraîne bien entendu une perte des bords des images I une fois celles-ci recalées. Toutefois, et notamment dans l'application au traitement d'image d'iris, on estime que le décalage moyen en rotation de l'oeil d'une image à une autre est de plus ou moins 7 degrés. Pour une largeur d'image généralement de 512 pixels, la perte des bords due au recalage est négligeable.

Dans une deuxième étape illustrée en figure 2 par un bloc 1 (COMPUT), on effectue une somme, pixel à pixel, sur les n images. On obtient alors, pour chaque position (pixel) de l'image, un nombre compris entre 0 et n.

L'image type reconstituée a la même taille (même nombre de pixels) que les images d'origine (à l'élimination des bords près).

La génération de l'image type résultat R, de façon à obtenir une image fiable pour une mise en oeuvre ultérieure de procédé de reconnaissance, consiste à exploiter les résultats de la somme des pixels des n images. En effet, si un pixel résultant a une valeur nulle ou proche de 0, cela signifie que la plupart des n images ont une valeur nulle à cette position. Par conséquent, on peut considérer qu'à cette position (pixel d'image), on a un 0 fiable dans l'image binarisée. De façon similaire, si le nombre résultat d'un pixel donné est proche de n, on peut considérer que l'on a un état 1 fiable.

Dans un mode de réalisation simplifié, on obtient alors une image type R comprenant, pour chaque pixel, un mot M de données (d'au minimum 2 bits) contenant au moins trois valeurs par pixel. Ces valeurs sont 0, 1 et un état indéterminé pour les pixels dont le résultat est considéré par le bloc 1 comme non fiable.

Idéalement, la fiabilité maximale d'une image est donnée en ne considérant comme fiable que les pixels pour lesquels les sommes des valeurs pixels à pixels sur les n images donnent le même résultat (c'est-à-dire les valeurs 0 et n). Toutefois, une telle fiabilité risque d'être obtenue au prix d'une perte trop importante de pixels significatifs dans l'image reconstituée, empêchant alors la reconnaissance ultérieure.

Pour résoudre ce problème, on détermine des seuils d'acceptation des valeurs 0 et 1. Par exemple, si le résultat est compris entre 0 et n/4, on considère que l'on dispose d'un 0 fiable. Si le résultat est par contre compris entre 3n/4 et 1, on considère que l'on est en présence d'un état 1 fiable. Entre les deux, on considère un état indéterminé, donc non fiable.

En variante, on peut utiliser des mots M de plus de deux bits pour conserver dans l'image résultat l'intégralité de la distribution des pixels. Toutefois, cela ne constitue pas un mode de réalisation préféré dans la mesure où l'image obtenue est le plus souvent destinée à être comparée à une autre image pour détecter la coïncidence entre les niveaux blancs et noirs et non en termes de niveau de gris.

Selon l'invention, le procédé d'obtention d'une image type d'au moins trois valeurs à partir d'un ensemble d'images binaires peut s'appliquer aussi bien à l'enrôlement, c'est-à-dire à la mémorisation initiale d'une image de référence d'un iris à partir de plusieurs prises de vues, qu'à un ensemble de prises de vue d'une image courante destinée à être ensuite comparée à une image de référence, que celle-ci ait été ou non enrôlée avec le procédé de l'invention.

L'étape de comparaison entre deux images s'effectue ensuite, par exemple et de façon classique, en n'acceptant que l'identité entre deux états 0 ou l'identité entre deux états 1. Les troisièmes états (ou les autres états) de l'image type de l'invention conduisent alors à l'obtention d'un état 0, indicateur d'une absence d'identité dans le résultat de la comparaison.

En variante, on peut attribuer des coefficients de pondération en cas d'absence d'identité entre les deux éléments comparés. Par exemple, on peut attribuer un coefficient -1 si les états des images comparées entre elles sont opposés, c'est-à-dire 0 et 1 ou 1 et 0, attribuer un 0 si les états sont entre ces deux valeurs ou indéterminés par le procédé de l'invention, et attribuer un 1 en cas d'identité deux à deux.

Bien entendu, la présente invention est susceptible de diverses variantes et modifications qui apparaîtront à l'homme de l'art. En particulier, le choix du nombre de valeurs de l'image type reconstituée par la mise en oeuvre de l'invention est à la portée de l'homme du métier à partir de l'application. L'obtention d'une image à trois états constitue cependant un mode de réalisation préféré notamment pour l'application au traitement d'image d'iris. De plus, l'étape de recalage initial des images est optionnel, notamment si les prises de vue ou les traitements initiaux des images pour obtenir l'ensemble d'images binaires tient compte d'un tel recalage. En outre, on peut prévoir un seuil fixant le nombre de pixels fiables de l'image type en deçà duquel on considère que la génération de l'image type ne peut être retenue pour une comparaison. Dans l'application à l'iris, ce seuil est, par exemple, de l'ordre de la moitié des pixels de l'image.

## Revendications

1. Procédé de génération d'une image type (R) comportant au moins trois valeurs par pixel, à partir d'un ensemble d'images binaires (I) représentant toutes un même élément, **caractérisé en ce qu'**il consiste à :
sommer les valeurs binaires des pixels de mêmes coordonnées de l'ensemble d'images binaires ;
générer un premier état dans l'image type si la somme des pixels de mêmes coordonnées des images binaires donne une valeur inférieure à un premier seuil ; et
générer un deuxième état dans l'image type si la somme des pixels de mêmes coordonnées des images binaires donne une valeur supérieure à un deuxième seuil.

2. Procédé selon la revendication 1, dans lequel le premier seuil est compris entre 0 et n/4, où n désigne le nombre d'images binaires.

3. Procédé selon la revendication 1, dans lequel le deuxième seuil est compris entre 3n/4 et 1, où n désigne le nombre d'images binaires.

4. Procédé selon la revendication 1, dans lequel les premier et deuxième seuils sont respectivement 0 et 1.

5. Procédé selon la revendication 4, dans lequel l'image type reconstituée contient, pour chaque pixel, la valeur de la somme des pixels des images d'origine.

6. Procédé selon l'une quelconque des revendications 1 à 5, dans lequel l'image type reconstituée contient une valeur représentant un état indéterminé pour chaque pixel dont ladite somme est comprise entre lesdits seuils.

7. Procédé de comparaison d'une image courante par rapport à une image de référence, **caractérisé en ce qu'**au moins l'une des images est une image type obtenue par la mise en oeuvre du procédé selon l'une quelconque des revendications 1 à 6.

8. Procédé selon la revendication 7, dans lequel les images sont issues de vues numériques d'iris d'oeil.
